# EUROPEAN PATENT SPECIFICATION

(11) **EP 2 745 027 B1**
(45) Date of publication and mention of the grant of the patent: **19.07.2017**
(21) Application number: 12750950.3
(22) Date of filing: 14.08.2012
(51) Int. Cl.: F16D 69/02

(54) **FRICTION MATERIAL FOR BRAKES**
REIBUNGSMATERIAL FÜR BREMSEN
MATÉRIAU DE FRICTION POUR DES FREINS

(30) Priority: 18.08.2011 US 201113212445
(43) Date of publication of application: 25.06.2014
(73) Proprietor: Federal-Mogul Corporation, Southfield MI 48033 (US)
(72) Inventor: SUBRAMANIAN, Vijay, Kochi Kerala State (IN)
(74) Representative: HGF Limited
(86) International application number: PCT/US2012/050686
(87) International publication number: WO 2013/048627

(56) References cited:
- WO-A1-2011/049576
- US-A1- 2007 142 500
- US-B2- 7 740 698

## Description

### FIELD OF THE INVENTION

The present invention relates to a non-asbestos friction material and in particular, to a friction material for a brake pad to be used for brakes of vehicles or industrial machines.

### BACKGROUND OF THE INVENTION

Copper in non-asbestos-based friction materials for brake pads provides many useful properties and performance characteristics including excellent reinforcing strength, increased friction coefficient at high temperatures and excellent heat transfer properties. In addition, copper provides many other qualities that increase the longevity of the friction material and the components the friction material engages, as well as reduces brake dust. However, copper is expensive and thus those of skill in the art look for more cost effective materials for use in brake pads.

Non-asbestos materials for brake pads also commonly include titanates, for example the friction materials of U.S. Patent No. 6,656,240 to Chiba et al. Titanates can provide high temperature stability comparable to asbestos type materials. Titanate materials, such as hexatitanate and octatitanate, are useful since they coat the rotor surface with a uniform and consistent transfer layer. However, like copper, titanates are also expensive and thus those of skill in the art look for more cost effective materials for use in brake pads.

Steel fibers have been used in place of copper and titanates in non-asbestos friction materials for brake pads. U.S. Patent No. 6,220,405 to Kesaven et al discloses examples of copper-free friction materials including steel fibers. However, steel fibers do not have many of the positive attributes of copper and are more fractionally aggressive, thereby increasing the amount of wear on the rotor against which the friction material engages. Steel fibers also generate dust that can quickly and permanently stain the surface finish of the rims of a vehicle.

Copper-free, non-asbestos brake pad materials including high amounts of dust have also been developed. U.S. Patent No. 6,617,375 to Kobayashi et al discloses examples of copper-free, non-asbestos friction materials including high amounts of cashew dust. However, the processing of such materials provides high scrap rates and requires other costly process steps. US2007/142500 describes a method of producing a friction material for use in the production of brake pads. WO2011/04957 describes a copper and titanate free non-asbestos friction material.

### SUMMARY OF THE INVENTION

According to an aspect the invention, there is provided a friction material for a brake as recited in the appended claims.

According to another aspect the invention, there is provided a brake pad as recited in the appended claims.

According to a further aspect the invention, there is provided a method for forming a brake pad as recited in the appended claims.

While the prior art includes efforts to at least partially remove copper or copper compounds and certain grades of titanates from friction pad compositions, it has not been known to be successful without sacrificing desirable performance characteristics including stopping capability, longevity, minimal rotor wear, minimal brake dust, and minimal staining of vehicle rims.

However, the inventive friction material overcomes the shortcomings of the prior art by providing performance characteristics similar to those of copper and titanate containing friction materials, at a fraction of the cost, which was completely unexpected. Brake pads formed of the inventive friction material are produced at 30-50 % lower cost than other friction materials, such as those containing copper and titantes.

The inventive friction material also provides excellent process capabilities, including high efficiency and unexpected low scrap rates, which contribute to the lower production cost. The scrap rates of the process of forming brake pads using the inventive friction material are about 0.6 % of the starting materials, which is about 25 % lower than the scrap rates of the prior art, such as processes using friction materials including copper and titanates.

The friction material of the present invention unexpectedly provides the same level of friction, pad life, noise, and other performance characteristics typical of non-asbestos, copper-containing or titanate-containing materials. Brake pads formed of the inventive friction material pass the following vehicle application tests: FMVSS 135 (14 % margin stopping distance); life test on vehicle (30,000 miles, minimum); and noise test on vehicle (zero noise).

### BRIEF DESCRIPTION OF THE DRAWINGS

The present invention will become more fully understood from the accompanying detailed description, claims, and the drawing in which:

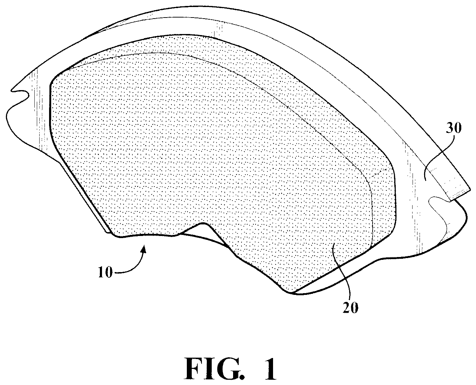

FIG. 1 is a perspective view of an exemplary friction material incorporated into an exemplary brake pad.

### DETAILED DESCRIPTION OF A PREFERRED EMBODIMENT

Disclosed is a non-asbestos friction material for brake pads and other brake materials that includes a binder; a fiber; a lubricant including at least one sulfide; at least one abrasive; a filler including rubber powder; and which is substantially free of copper, metal fibers, and titanates.

The friction material 20 may be used in the brake pad 10 illustrated in FIG. 1. The brake pad 10 illustrated in FIG. 1 is only an exemplary brake pad and may take on any size, shape or configuration. The friction material 20 when used in a brake pad 10 is typically bonded or otherwise secured to a backing plate 30.

By non-asbestos, it is meant the friction material includes asbestos in an amount of not greater than 0.2 % by volume, preferably not greater than 0.1 % by volume, and most preferably 0 % by volume, based on the total volume of the friction material, after processing.

Substantially free of copper means the friction material is substantially free of copper, or alloys of copper, such as brass and bronze, and includes each copper-containing material in an amount of not greater than 0.2 % by volume, preferably not greater than 0.1 % by volume, and most preferably 0 % by volume, based on the total volume of the friction material, after processing.

Substantially free of metal fibers means the friction material includes metal fibers, such as steel or bronze fibers, in an amount of not greater than 0.2 % by volume, preferably not greater than 0.1 % by volume, and most preferably 0 % by volume, based on the total volume of the friction material, after processing. Metal fibers, that are preferably not used in the friction material, can be formed of any metal or metal alloy and typically have a length of 0.5 mm to 10 mm.

By substantially free of titanates, it is meant to be substantially free of compounds like potassium titanate, magnesium potassium titanate, lithium potassium titanate, calcium potassium titanate, and other hexa and octa-titanates and other titanates developed as asbestos alternatives. The friction material includes titanates in an amount of not greater than 0.2 % by volume, preferably not greater than 0.1 % by volume, and most preferably 0 % by volume, based on the total volume of the friction material, after processing.

The non-asbestos friction material of the invention includes at least one binder forming 21 % by volume of the total friction material, after processing. Examples of modified binders include silicone, acrylic, epoxy, and nitrile. The binder serves as a matrix that holds the other ingredients together in the friction material. The binder system may also comprise a mixture of two or more types of binders, at least one of which is a phenolic type binder if desired for a particular application to achieve a desired performance characteristic. In one embodiment, the resin is a blend of a phenolic and non-phenolic resin. The binder is an unmodified phenolic resin.

The fiber of the friction material has a length of 0.5 mm to 10 mm and forms 7 % by volume of the total friction material, after processing. The fiber is aramid fiber. Aramid fibers preferably have an average length of 1.09 mm with an approximate range of 0.92 mm to 1.26 mm. PAN fibers have a length range of about 5.0 to 7.5 mm. Cellulose fibers have a length less than 1 mm. The fibers provide integrity and structural strength to the friction material. Fibers also help with stability of pre-cured preforms during the manufacturing process. Various fibers and fiber lengths can thus be used to control manufacturing and performance characteristics of the friction material. The fibers can be synthetic or natural in origin, and pure or recycled in form.

The lubricant includes at least one metal sulfide. The lubricant is included in the friction material to reduce pad and disc wear during service.. Examples of metal sulfides include, but are not limited to, tin sulfides, antimony tri-sulfide, antimony trioxide, zinc sulfide, and iron sulfide. An example of an organic lubricant is phthalocyanine and examples of metal lubricants include tin and zinc powders. Metal sulfides include metal sulfide complexes such as those having tin sulfide as one of the main ingredients. The lubricant includes a blend of antimony tri-sulfide and at least one metal sulfide different from the antimony tri-sulfide, each in an amount of 2 % by volume.

The friction material further includes at least one abrasive, including a hard abrasive and a mild abrasive. The abrasives form approximately 15 % by volume of the friction material, after processingolume. More specifically, the hard abrasives form 10 % while the mild abrasives form 5 % by volume of the friction material. Examples of hard abrasives include certain mineral fibers, zirconia, alumina, magnesium oxide, zirconium silicate, silica, silicon dioxide, sand, silicon carbide, mullite, and iron oxide. Hard abrasives tend to have higher values on the Mohs hardness scale. Other examples of abrasives include some grades of ceramic fibers including complex mineral silicates such as calcium magnesium silicate, calcium magnesium zirconium silicate, calcium magnesium aluminum silicate, and magnesium aluminum silicate. Other known abrasives that are mild in nature include iron oxides of different chemistries, other metallic oxides, and materials and minerals that have relatively lower values on the Mohs hardness scale. The hard abrasives are generally used in low concentrations while the mild abrasives are typically used in higher concentrations to achieve the same desired friction level.

The abrasives include magnesium oxide in an amount of 5 % by volume, based on the total volume of the friction material.

The abrasives include a blend of magnesium oxide, mineral fiber, such as a bio soluble grade of mineral fiber, and mica, each present in an amount of 5 % by volume, based on the total volume of the friction material.

The other ingredients included in the friction material form the balance of the composition and are classified generally as fillers and/or modifiers. The filler at least includes rubber powder, andincludes a blend of several components. The filler makes up 53% of the friction material. The filler generally provides bulk to the formulation, reduce cost, provide noise reduction and help with coating the rotor surface with a uniform transfer layer. Examples of suitable fillers include lime, calcium oxide, barytes, including barium sulfate, graphite, petroleum coke, desulfurized coke, calcium silicate, rubber including various powder rubbers, such as powdered nitrile rubber, and recycled rubber, and friction dust including brown, black, straight, modified or other grades of friction dust.

The rubber powder of the filler is present in an amount of 9 % by volume, based on the total volume of the friction material. In addition to the rubber powder, the filler further includes graphite in an amount of 6 % by volume; petroleum coke in an amount of 6 % by volume; barytes in an amount of 21 % by volume; friction dust in an amount of 9 % by volume; and hydrated lime in an amount of 2 % by volume.

Further, in one embodiment, the friction material is substantially free of iron, and thus includes iron in an amount not greater than 5 % by volume, or not greater than 2 %, or less than 1 %, or 0 % by volume, based on the total volume of the friction material, after processing.

In another embodiment, the friction material is substantially free of wetting agent, and thus includes wetting agent in an amount not greater than 5 % by volume, or not greater than 2 %, or 1 % by volume, based on the total volume of the friction material, after processing. The wetting agent is also known as a surfactant, detergent, emulsifier, foaming agent, or dispersant. The wetting agent is a chemical substance or blend of chemical substances that increases the spreading and penetrating properties of a liquid by lowering its surface tension. The wetting agent can lower the surface tension of a liquid, the interfacial tension between two liquids, or that between a liquid and a solid.

The friction material is processed and formed by mixing, pressing, and curing operations typically used in the industry to make brake pad friction materials. This involves dry mixing the ingredients in a standard tumble mixer, with optional use of plows and choppers, to blend the ingredients into a homogeneous mixture. The total mixing time is about 7 minutes.

The mixture is then pressed, preferably under a pressure of 4-25 tons/piece into friction pads in the form of preforms or pucks using a room temperature press operation. The preforming time is approximately 5 seconds. Variations in the process may include loose filling the mix into the pressing mold directly or by use of a liquid binder system.

The preforms or pucks are then placed into a hot block mold with a metal backplate on one side and hot press cured to bond cured friction material to the backing plate to form the final brake pad. The friction material may be attached directly to the backplate or with use of an underlayer material, as is well known in the industry. The pressing is preferably conducted at a pressure of 5-50 tons/piece and temperature of 265-295° F. The total pressing time is about 250 seconds.

The brake pads bound for market further undergo a post bake operation. The baking of the pressed friction pad and baking plate is preferably conducted in a standard air convention oven at a temperature of 330- 370° F. The total post bake time is about 6 hours. The brake pads for market would also undergo one or more finishing operations, before being packaged for commercial sale.

The brake pads can be formed by a process consisting essentially of the mixing, pressing, and post baking steps described above, meaning other significant or costly process steps are not required. The excellent process capability of the inventive friction material was completely unexpected and contributes to the 30-50 % cost reduction over the prior art.

The following Example 10 provides the inventive friction material prepared using the present invention and has sufficient performance characteristics. Examples 1-9 provide comparative friction materials. The friction materials of each Example were processed and formed into brake pads according to the mixing, pressing, curing, and post baking operations described above. Each of the examples were also evaluated for certain manufacturing characteristics including mixing, preforming, pressing, physical hardness, physical compression. The friction materials were further evaluated for bonding to the back plate at room temperature and at 265-295° F, as well as certain performance characteristics including friction pad life, pad wear, rotor wear characteristics and costs. All compositions described below are expressed in volume %, based on the total volume of the final friction material product, after processing, and have been rounded off to the nearest whole number for simplicity.

**COMPARATIVE EXAMPLE 1**

| | |
|---|---|
| Binder | 21 |
| Fiber | 7 |
| Lubricant | 4 |
| Total Abrasives | 15 |
| Fillers | 53 |
| Copper and copper alloys | 0 |
| Titanates | 0 |
| Total | 100 |

The friction material of Example 1 was found to have good all-around manufacturing and performance characteristics, similar to those of copper-containing or titanate-containing friction materials. The friction material provided the same level of friction, pad life, noise, and other performance characteristics typical of non-asbestos friction materials containing copper and titanate. The friction material also provided excellent process capabilities, including high efficiency and unexpected low scrap rates.

**COMPARATIVE EXAMPLE 2**

| | |
|---|---|
| Binder | 24 |
| Fiber | 7 |
| Lubricant | 4 |
| Total Abrasives | 15 |
| Fillers | 50 |
| Copper and copper alloys | 0 |
| Titanates | 0 |
| Total | 100 |

Some variations in Example 2 as compared to Example 1 included extremely low void volumes in the pad. Generally a very desirable characteristics for brake pads is low noise levels since the noise from braking is a common cause of customer complaints related to braking systems. Low level voids also correlate to very stiff pads with very low compressibility values. This material showed the lowest compressibility properties of all the examples tested, demonstrating that the high resin binder level affects this property. The bonding to the back plate both at room temperature and at 265-295° F was excellent, and very low press pressures were required to get acceptable pad integrities. However, due to the low compressibility and in particular the low voids potentially causing noise, a binder level above 24 % by volume of the friction material would be undesirable. Therefore, it is believed that 24 % of binder by volume is the maximum level of binder that may be used in a volume percent of the final friction composition.

**COMPARATIVE EXAMPLE 3**

| | |
|---|---|
| Binder | 15 |
| Fiber | 7 |
| Lubricant | 4 |
| Total Abrasives | 15 |
| Fillers | 59 |
| Copper and copper alloys | 0 |
| Titanates | 0 |
| Total | 100 |

The final friction composition of Example 3 had generally good performance characteristics although the preforming and bonding to the back plate at 265-295° F characteristics were not as good as the friction material in mixture Example 1. It is believed that the binder 15 % by volume or less detracts from the bonding characteristics of the friction material and in particular, bonding the friction material to the back plate at 265-295° F. The friction material of Example 3 did not provide the excellent bonding characteristics provided by Example 2.

**COMPARATIVE EXAMPLE 4**

| | |
|---|---|
| Binder | 21 |
| Fiber | 3 |
| Lubricant | 4 |
| Total Abrasives | 15 |
| Fillers | 57 |
| Copper and copper alloys | 0 |
| Titanates | 0 |
| Total | 100 |

Example 4 reduces the fiber content to 3 % by volume. In comparison to the friction material of Example 1, the pad was difficult to preform and had low physical compression as well and was somewhat difficult to bind to the back plate at 265-295° F. The cured friction material was unacceptably brittle. Therefore, the pads should include more than 3 % and preferably 5 % or more by volume fiber to provide acceptable performance characteristics.

**COMPARATIVE EXAMPLE 5**

| | |
|---|---|
| Binder | 21 |
| Fiber | 13 |
| Lubricant | 4 |
| Total Abrasives | 15 |
| Fillers | 47 |
| Copper and copper alloys | 0 |
| Titanates | 0 |
| Total | 100 |

The material of Example 5 employed a high level of fiber which produced good performance characteristics but some process difficulties. During processing, the high level of fiber made this material difficult to mix, but dividing the mix into smaller batches helped. However, smaller batches would significantly increase the cost of manufacturing of the material and thus would be undesirable. Therefore, the friction material should have less than 13 % by volume of fibers in the total composition and more particularly, approximately 5-9 % by volume of the total composition.

**COMPARATIVE EXAMPLE 6**

| | |
|---|---|
| Binder | 21 |
| Fiber | 7 |
| Lubricant | 0 |
| Total Abrasives | 15 |
| Fillers | 57 |
| Copper and copper alloys | 0 |
| Titanates | 0 |
| Total | 100 |

Example 6 had generally good all-around characteristics. However, the preforming and pressing of the processing stage were negatively affected by the lack of lubricants. Without the lubricants, it was found that the preforms were not as stable when pressed at low pressures and that pressure had to be significantly increased to maintain preform integrity and that the parts had to be press cured for longer. It is believed that the presence of lubricants is not only important to the frictional wear properties of the brake pads once manufactured, but also during the preform and pressing stage as the compacting of the ingredients may be influenced by the presence of lubricant materials.

**COMPARATIVE EXAMPLE 7**

| | |
|---|---|
| Binder | 21 |
| Fiber | 7 |
| Lubricant | 6 |
| Total Abrasives | 15 |
| Fillers | 51 |
| Copper and copper alloys | 0 |
| Titanates | 0 |
| Total | 100 |

In Example 7, the amount of lubricant was increased to 6 % by volume. The increase in lubricants was found to require significantly increased pressing and longer cure times in comparison to Example 1. The extremely high level of lubricants influenced the compacting of the ingredients during the preforming stage while the remaining performance characteristics were good. For efficient manufacturing purposes, the material should have less than 6 % by volume of the lubricant of the total composition, and preferably under 4 % by volume of the total friction material composition. Also, as lubricants are expensive, when combined with the difficulties in processing, it is desirable to minimize the amount of lubricants added. Therefore, at least some lubricant that allows for better pressing is desirable, but it is also desirable to keep the amount of lubricants to about 6 % or less and preferably less than 4 % by volume.

**COMPARATIVE EXAMPLE 8**

| | |
|---|---|
| Binder | 21 |
| Fiber | 7 |
| Lubricant | 4 |
| Total Abrasives | 9 |
| Fillers | 59 |
| Copper and copper alloys | 0 |
| Titanates | 0 |
| Total | 100 |

The friction material formed in Example 8 had the lowest levels of abrasive material. The performance characteristics related to friction suffered, as the material had one of the lowest levels of friction coefficient measured among all variations of examples. However, it is believed that other parameters may be adjusted to keep the friction coefficient within the desirable range. Surprisingly, during the processing and formulation stage of the brake pad, the bonding to the back plate and in particular the bonding into the back bond retention plate at 265-295° F was also negatively affected. Therefore, it is believed that the total amount of abrasives should at least be greater than 9 % by volume of the total composition.

**COMPARATIVE EXAMPLE 9**

| | |
|---|---|
| Binder | 21 |
| Fiber | 7 |
| Lubricant | 4 |
| Total Abrasives | 22 |
| Fillers | 46 |
| Copper and copper alloys | 0 |
| Titanates | 0 |
| Total | 100 |

The friction material of Example 9 increased the level of abrasive material to 22 %. The preforming and performance characteristics were good. The formulation processed fairly well with an ease of mixing, preforming and press cycle operations. The hardness of the pads was one of the highest of the materials tested in the Examples. One downside to using such high level abrasives is cost. It is believed that a friction material having approximately 22 % or less abrasives is preferred to minimize the cost even though the friction material may have otherwise acceptable performance and processing characteristics.

**INVENTIVE EXAMPLE 10**

| Category | Example Composition | Range (% by vol.) | Example Amount (% by vol.) |
|---|---|---|---|
| Binder | Unmodified Phenolic Resin | 16-24 | 21 |
| Fiber | Aramid | 4-12 | 7 |
| Lubricant | Metal Sulfide | 2-5 | 2 |
| | Antimony tri-sulfide | | 2 |
| Abrasive | Mineral Fiber | 10-22 | 5 |
| | Magnesium Oxide | | 5 |
| | Mica | | 5 |
| Filler | Rubber Powder | 46-65 | 9 |
| | Graphite | | 6 |
| | Petroleum Coke | | 6 |
| | Barytes | | 21 |
| | Friction Dust | | 9 |
| | Hydrated Lime | | 2 |
| Other | Cu and Cu Alloys | 0-0.2 | 0 |
| | Titanates | 0-0.2 | 0 |
| | Metal Fibers | 0-0.2 | 0 |
| | Wetting Agents | 0-0.2 | 0 |

Friction materials including the components of the example composition and within the ranges of Example 10 were processed, formed into brake pads, and tested, as described above. Like the friction material of Example 1, the friction materials of Example 10 provided excellent performance characteristics. The friction materials provided the same level of friction, pad life, noise, stopping capability, longevity, rotor wear, brake dust, staining, and other performance characteristics typical of non-asbestos, copper-containing or titanate-containing materials.

The friction materials of Example 10 also provided excellent process capabilities, including process efficiency and unexpected low scrap rates.

The total scrap rate of the friction materials of Example 10 were determined to be 0.6 % total. The scrap rates due to friction no-fills/tearout were 0.10 %; set-up 0.10 %; cracks 0.01 %; friction blisters 0.03 %; and other scrap 0.36 %.

The friction materials of Example 10 were formed into brake pads, and passed the following vehicle application tests: FMVSS 135 (14 % margin stopping distance); life test on vehicle (30,000 miles, minimum); and noise test on vehicle (zero noise).

The brake pads formed of the friction material of Example 10 were also produced at a fraction of the cost of brake pads formed of prior art friction materials, such as those including copper and titanates. The brake pads formed of the inventive friction materials of Example 10 were 30-50 % cheaper than those formed of friction materials containing copper and titantes.

## Claims

1. A friction material (20) for a brake comprising, in percent (%) by volume of said friction material:
as a binder, unmodified phenolic resin at 21 %;
as fiber, aramid at 7 %;
as lubricant, metal sulphide at 2 % and antimony tri-sulfide at 2 %;
as abrasives, mineral fiber at 5 %, magnesium oxide at 5 % and mica at 5 %;
as filler, rubber powder at 9 %, graphite at 6 %, petroleum coke at 6 %, barytes at 21 %, friction dust at 9 % and hydrated lime at 2 %;
said friction material being free from metal fibers, titanates and copper.

2. The friction material (20) of Claim 1 wherein said rubber powder comprises nitrile rubber.

3. A brake pad (10) comprising:
a backing plate (30);
a friction pad fixed to said backing plate, said friction pad fabricated of a friction material (20) according to Claim 1.

4. A method of forming a brake pad (10) comprising the steps of:
mixing a binder, fiber, lubricant, abrasives and filler to form a homogeneous mixture having a composition, based on the total volume of the mixture, as specified in claim 1:
pressing the homogeneous mixture under a pressure of 4-25 tons/piece at room temperature to form a friction pad of the mixture;
pressing the friction pad and a backing plate together under a pressure of 5-50 tons/piece at a temperature of 265-295° F (∼129-146°C); and
baking the pressed friction pad and backing plate at a temperature of 330-370° F (∼166-188°C).

## Patentansprüche

1. Reibmaterial (20) für eine Bremse, aufweisend in Volumen-% des Reibmaterials:
als ein Bindemittel, unverändertes Phenolharz bei 21 %,
als Faser, Aramid bei 7 %,
als Schmiermittel, Metallsulfid bei 2 % und Antimontrisulfid bei 2 %,
als Abrasivstoffe, Mineralfaser bei 5 %, Magnesiumoxid bei 5 % und Glimmer bei 5 %,
als Füllmaterial, Kautschukpulver bei 9 %, Grafit bei 6 %, Erdölkoks bei 6 %, Baryt bei 21 %, Reibungsstaub bei 9 % und Kalkhydrat bei 2 %,
wobei das Reibmaterial frei von Metallfasern, Titanaten und Kupfer ist.

2. Reibmaterial (20) nach Anspruch 1, wobei das Kautschukpulver Nitrilkautschuk aufweist.

3. Bremsbelag (10), aufweisend:
eine Trägerplatte (30),
ein an der Trägerplatte befestigter Reibbelag, wobei der Reibbelag aus einem Reibmaterial (20) nach Anspruch 1 hergestellt ist.

4. Verfahren zur Bildung eines Bremsbelags (10), umfassend die folgenden Schritte:
Vermischen eines Bindemittels, Faser, Schmiermittel, Abrasivstoffe und Füllmaterial, um eine homogene Mischung mit einer Zusammensetzung, basierend auf das Gesamtvolumen der Mischung, wie in Anspruch 1 vorgegeben zu bilden:
Pressen der homogenen Mischung unter einem Druck von 4-25 Tonnen/Stück bei Raumtemperatur, um einen Reibbelag aus der Mischung zu bilden,
Zusammenpressen des Reibbelags und einer Trägerplatte unter einem Druck von 5-50 Tonnen/Stück bei einer Temperatur von 265-295° F (∼129-146°C) und
Backen des gepressten Reibbelags und Trägerplatte bei einer Temperatur von 330-370° F (∼166-188°C).

## Revendications

1. Matériau de friction (20) pour un frein comprenant, en pour cent (%) par volume dudit matériau de friction :
21 % d'une résine phénolique non modifiée en tant que liant ;
7 % d'aramide en tant que fibre ;
2 % de sulfure métallique et 2 % de trisulfure d'antimoine en tant que lubrifiant ;
5 % de fibres minérales, 5 % d'oxyde de magnésium et 5 % de mica en tant qu'abrasifs ;
9 % de poudre de caoutchouc, 6 % de graphite, 6 % de coke de pétrole, 21 % de baryte, 9 % de poussière de friction et 2 % de chaux hydratée en tant que charge ;
ledit matériau de friction étant exempt de fibres de métal, de titanate et de cuivre.

2. Matériau de friction (20) selon la revendication 1, dans lequel ladite poudre de caoutchouc comprend du caoutchouc nitrile.

3. Plaquette de frein (10), comprenant :
une plaque de renfort (30) ;
une plaquette de friction fixée à ladite plaque de renfort, ladite plaquette de friction étant fabriquée d'un matériau de friction (20) selon la revendication 1.

4. Procédé de formation d'une plaquette de frein (10) comprenant les étapes consistant à :
mélanger un liant, une fibre, un lubrifiant, des abrasifs et une charge pour former un mélange homogène ayant une composition, sur la base du volume total du mélange, telle que spécifiée dans la revendication 1 ;
presser le mélange homogène sous une pression de 4 à 25 tonnes/pièce à température ambiante pour former une plaquette de friction du mélange ;
presser la plaquette de friction et une plaque de renfort conjointement sous une pression de 5 à 50 tonnes/pièce à une température de 265 à 295 °F (∼ 129 à 146 °C) ; et
renforcer la plaquette de friction et la plaque de renfort pressées à une température de 330 à 370 °F (∼ 166 à 188 °C).
